# EUROPEAN PATENT APPLICATION

(11) **EP 4 821 766 A1**
(43) Date of publication of application: **14.10.2026**
(21) Application number: 26170347.4
(22) Date of filing: 01.04.2026
(51) Int. Cl.: B60R 11/04, B60R 1/12, B60R 11/00

(54) **EXTERNAL REAR-VIEW DEVICE AND METHOD FOR ASSEMBLING AN EXTERNAL REAR-VIEW DEVICE**

(30) Priority: 09.04.2025 DE 102025114058
(71) Applicant: Motherson Innovations Company Ltd., London, E14 5HU (GB)
(72) Inventor: GOMES, Ryan, Portchester PO16 9SD (GB); O'FLYNN, Sean, Portchester PO16 9SD (GB)
(74) Representative: Weber-Bruls, Dorothée

(57) **Abstract**

The present disclosure refers to an external rear-view device (100) for a vehicle (110), comprising: at least one structural component (10) being provided by a base assembly, which comprises a lower base cover (12) and an upper base cover (14), wherein the lower base cover (12) and the upper base cover (14) are adapted to define an accommodation space (16) therein between; a camera holding device (30) configured to be mounted at least partially inside the accommodation space (16) and provided with at least two chambers (32, 34, 36); and at least two image capturing devices (40, 42, 44), which are accommodated in the camera holding devic e (30), wherein the camera holding device (30) provides one chamber (32, 34, 36) per image cap turing device (40, 42, 44), characterized in that each chamber (32, 34, 36) is provided with a first, front opening (93) facing the outside of the external rear-view device (100) in an assembled state and a second, rear opening (92) facing the inside of the external rear-view device (100) in the assembled state, a first mounting means, preferably a first clip (90), is adapted to secure a first image capturing device (40) at the rear side of a first chamber (32) and a second mounting means, preferably a back plate 195, is adapted to secure a second image capturing device (34) from the rear side of a second chamber (42). It also refers to an assembling method.

## Description

The present disclosure relates to an external rear-view device of a vehicle according to the pre-amble of claim 1 and a method for assembling an external rear-view device according to the pre-amble of claim 10, with at least two image capturing devices being arranged with different orientations in the external rear-view device.

Vehicle safety and driver assistance systems have increasingly relied on image-capturing devices such as cameras to provide crucial visual information. These cameras, often integrated into mirror assemblies, serve purposes of enhancing driver visibility and driving assistance while driving the vehicle. Typically, cameras are positioned in both the front and rear sections of vehicles, with front cameras often discreetly incorporated into mirror assemblies.

The prior art US 7, 965, 336 B1 relates to a camera mounting system for vehicles. The system disclosed a camera housing that includes an image sensor and can be adjusted with at least one axis relative to the camera housing. While this design offers some flexibility in camera positioning, it is limited to a single camera and doesn't address the challenges of integrating multiple cameras.

The further prior art US 12, 060, 006 B2 relates to a method for assembling a camera in a vehicle's exterior mirror. The method involves a base assembly for arrangement on the motor vehicle, a head assembly attached to the base assembly and configured to move with respect to the base assembly. A camera cradle which is configured to be secured to the base assembly or the head assembly. The camera cradle being removably secured to the base assembly or the head assembly by a friction fit and without any separable attachment element. While this method provides a way to integrate the camera cradle into the mirror assembly, it does not address the challenges of mounting multiple cameras in the vehicle's exterior mirror.

The additional prior art DE 102 023 206 239 A1 relates to a multi-camera system for vehicles. At least two camera housings for receiving a camera in each housing and a rear clamp for fixing each camera in the respective housing, wherein the camera housings and the rear clamp are arranged in a common camera mount. While this addresses the problem relating to mounting of multiple cameras, but the system doesn't provide a simplified solution for mounting multiple cameras in a space constraint external mirror assembly, potentially leading to increased complexity in installation and maintenance.

DE 10 2022 105 242 A1 refers to a camera mount for attachment to a vehicle body of a motor vehicle, in particular a bus or commercial vehicle, or a trailer of the motor vehicle, having a camera support part that can be fixed to the vehicle body and has at least one receiving shaft for receiving at least one camera body a camera, and having an enveloping housing that can be slipped onto the camera support part, the enveloping housing having a receiving opening for receiving the camera support part and at least one has a window opening provided in a housing wall area, in or behind which a lens of the camera can be positioned, the camera support part and the enveloping housing each having guide contours for positioning the enveloping housing on the camera support part, the camera support part and the enveloping housing being detachably attachable to one another.

### Independent claim

Existing camera holding structures for the image capturing devices within mirror assemblies often lack adaptability, making it difficult to adjust camera positions or accommodate multiple cameras within a single unit. Additionally, assembling challenges for achieving precise tolerances in the production of holding structures is time-consuming and costly. The process of tolerance stacking during manufacturing or assembling poses a significant challenge, often requiring complex multi-objective optimization approaches.

Further, a limited field of view by single-image capturing device systems or fixed-position cameras may not provide comprehensive coverage of the vehicle's surroundings, potentially leaving blind spots.

Furthermore, many existing systems do not allow for an easy removal or replacement of cameras, rather require a complicated maintenance and future upgrades. Existing designs often struggle to seamlessly integrate multiple cameras within the confined space of a mirror assembly without compromising aesthetics. In addition, the absence of a flexible, standardized mounting system makes it challenging to adapt camera setups across different vehicle models or to accommodate advancements in camera technology.

Even more, the installation of cameras in existing systems can be labour-intensive and time-consuming, increasing production costs and potential for errors. These limitations highlight the need for an improved camera holding device with enhanced geometrical configuration specifically adapted for securing multiple cameras in vehicles. Such a system should address the challenges of flexibility, assembling or manufacturing efficiency, comprehensive coverage, and ease of maintenance while maintaining the aesthetic and functional integrity of the vehicle's design.

Therefore, there is a need for an improved external rear-view device with enhanced geometrical configuration specifically adapted for securing a plurality of image capturing devices in vehicles.

In view of the aforementioned drawbacks, and others inherent in the existing state of the art, it is the object of the present disclosure to further develop the known external rear-view device and method for assembling the same to overcome at least some of the aforementioned drawbacks.

This object is solved for the external rear-view device by the characterizing features of claim 1. Claims 2 to 10 describe embodiments of the external rear-view device of the present invention.

In an aspect of the present disclosure is to provide the external rear-view device configured with the image capturing devices of the vehicle.

The present disclosure provides the external rear-view device comprising at least one structural component being provided by a base assembly, which comprises a lower base cover and an upper base cover, wherein the lower base cover and the upper base cover are adapted to define an accommodation space therein between, at least two, preferably at least three, image capturing devices and a camera holding device, wherein the at least one structural component, the at least two image capturing devices and the camera holding device are assembled on the external rear-view device. This provides a modular, flexible design that accommodates the image capturing devices within a single unit, improving integration and customization options over traditional single- image capturing device systems.

In an aspect, the camera holding device is configured to be mounted inside the accommodation space, and/or at least two, preferably at least three, image capturing devices are accommodated in the camera holding device.

In an aspect, each chamber is provided with a first, front opening facing the outside of the external rear-view device in an assembled state and a second, rear opening facing the inside of the external rear-view device in the assembled state.

In an aspect, the camera holding device is positioned on the lower base cover.

In another aspect, the camera holding device is provided with at least one rib for connecting the at least three chambers, preferably at least one rib per chamber. In another aspect, the camera holding device is provided with at least one locating provision. In another aspect, the camera holding device is provided with at least one mounting provision, preferably on the rib, wherein the mounting provision is adapted to securely couple with a corresponding mounting arrangement of the structural component. This offers versatility in mounting and positioning, allowing for optimal placement and orientation of the external rear-view device on various vehicle designs.

In another aspect, the rib is adapted to provide flexibility to hold the at least two chambers in a plane, preferably being a horizontal plane or a vertical plane, to locate the at least one locating provision provided inside the structural component and/or apertures of the structural component for the image capturing devices. In another aspect, the rib is formed with a bend to provide an angle between two neighbouring chambers. In another aspect, the rib comprises an axial rib element and a lateral rib element. In another aspect, the rib is provided with a holder to removably couple the camera holding device with the structural component, preferably on the upper base cover of the structural component. These features enhance structural integrity and position flexibility of the camera holding device, improving image capturing device alignment and stability beyond what is possible with rigid, single- image capturing device mounts. Additionally, this allows for the image capturing devices in a single unit, providing a more comprehensive field of view and reducing blind spots compared to single- image capturing device setups. Moreover, the at least one rib provides rigidity, flexibility, and coupling options for the camera holding device. This provides multi-directional adjustment capabilities, allowing precise image capturing device positioning and adaptation to different vehicle designs or user preferences, surpassing the limited adjustability of many existing systems.

In an aspect, a first mounting means, preferably a first clip, is adapted to secure a first image capturing device at the rear side of a first chamber and a second mounting means, preferably a back plate, is adapted to secure a second image capturing device from the rear side of a second chamber.

In another aspect, a second clip is adapted to secure the third image capturing device from the back side of the third chamber. Each clip, the first and second clips, comprising at least two legs and at least one spring tab, wherein the spring tab is a flexible backstop unit, wherein the legs provide a bend and snap mechanism to the clip to lock the same with the respective chamber, the clip is removed by transferring external force to the legs and lifting upwardly, and/or wherein the two legs are arranged apart from each other to provide a U-shape. Thus, the clip provides a specific locking mechanism. Therefore, the clip provides a secure, flexible mounting mechanism for image capturing devices, facilitating maintenance and upgrades more easily than permanently fixed camera installations.

In an embodiment, the chambers may be adapted to secure the image capturing devices with complementary profiles. This offers a customizable solution for housing multiple cameras with different profiles, increasing compatibility with various camera models and future upgrades.

In another embodiment, image capturing devices are secured, in addition or alternatively, via snap-fit or removable coupling arrangements. This offers multiple securing options for image capturing devices, improving adaptability and ease of assembly compared to systems with permanent or complex mounting mechanisms.

In an aspect, a locating provision provided on the camera holding device includes a cruciform element, an interface element, an elongated element, a hole and/or a hoop clip. In another aspect, the locating provision provided on the camera holding device cooperates with any of the corresponding locating elements provided on the structural component. These locating provisions further enhances positioning accuracy and stability of the camera holding device within the structural component, improving overall device performance and reliability beyond basic mounting solutions.

The object of the present disclosure is solved for a method according to the pre-amble of claim 11 by the characterizing features of said claim. Embodiments of said method are described in claims 12 to 19.

In an aspect of the present disclosure, a method for assembling at least two image capturing devices in an external rear-view device with different orientations is disclosed. A camera holding device provides one chamber per image capturing device and at least one structural component of the external rear-view device for a vehicle. Each chamber is provided with a first, front opening facing the outside of the external rear-view device after assembly and a second, rear opening facing the inside of the external rear-view device after assembly. The method comprising the following steps:
a1. inserting a second image capturing device of the at least two image capturing devices in a second chamber of the camera holding device from the front side of the second chamber via its first, front opening, and preferably
a2. mounting the camera holding device via locating provisions to complementary locating elements provided by the structural component, preferably after the insertion of the second image capturing device in the insertion step a1, and/or
a3. coupling the camera holding device with the structural component by at least one screw, preferably after mounting the camera holding device in the mounting step a2, and
b1. inserting a first image capturing device of the at least two image capturing devices in a first chamber of the camera holding device from the rear of the first chamber via its second, rear opening, and preferably
b2. locking the first image capturing device by a first clip from the rear of the first chamber, and/or
c1. inserting a third image capturing device in a third chamber from the rear side of the third chamber via its second, rear opening, and preferably
c2. locking the third image capturing device by a second clip from the rear of the third chamber, preferably after mounting and/or coupling of the camera holding device in the mounting step a2 and/or coupling step a3, respectively, and/or
d. connecting connectors with the image capturing devices, preferably after the locking step b2 and/or step c2.

In an aspect, the camera holding device is provided, in particular, with the second chamber being arranged between the first and third chambers and/or as an asymmetric one-piece camera holding device. The asymmetric one-piece camera holding device allows a more comprehensive field of view and reducing blind spots for the image capturing devices compared to single-image capturing device setups.

In an aspect, insertion of the second image capturing device in the insertion step a1 described above comprises locking of the second image capturing device via a snap fit arrangement.

In an aspect, the insertion step a1 of the second image capturing device in the second chamber is performed prior to the insertion step b1 of the first image capturing device in the first chamber and, if existing, also prior to the insertion step c1 of the third image capturing device in the third chamber. In another aspect, any sequence of insertion of the image capturing devices are also possible.

Therefore, foregoing method outlines a systematic assembling process, reducing assembling complexity, assembly time, and associated costs while ensuring proper installation of all components, addressing inefficiencies in existing assembling processes due space constraint inside the rear-view mirror assembly, in particular the base assembly.

It should be understood that any one of the described features and/or embodiments of the disclosure may be used separately or in combination with other disclosed features and/or embodiments. The term "at least one" refers to one or a plurality and may be even understood as "all of".

Other aspects, advantages, and salient features of the present disclosure will become apparent to those skilled in the art from the following detailed description disclosing one or more embodiments of the present disclosure by way of example only, which taken in conjunction with the annexed drawings, discloses exemplary embodiments of the disclosure, wherein:
- Fig. 1A: illustrates a front view of a vehicle equipped with an external rear-view device, in line with an embodiment;
- FIG. 1B: illustrates a top view of the vehicle of Fig. 1A;
- Fig. 2: illustrates an exploded view of the external rear-view device of Figs. 1A and 1B showing a structural component, an intermediate member and housing covers along with the internal components;
- Fig. 3: illustrates an exploded view of the external rear-view device of Fig. 2 in a different view;
- Fig. 4: illustrates an exploded view of the external rear-view device in yet another different view;
- Fig. 5: illustrates a top view of the camera holding device accommodated with the image capturing devices, in accordance with an embodiment of the present disclosure;
- Fig. 6: illustrates an isometric view of the camera holding device accommodated with the image capturing devices;
- Fig. 7: illustrates an isometric view of the camera holding device illustrating the chambers, in accordance with an embodiment;
- Fig. 8: illustrates a top view of the camera holding device with labelled components including ribs, locating provisions and mounting provisions, in accordance with an embodiment;
- Fig. 9: illustrates a clip to secure the image capturing devices in the chambers, in accordance with an embodiment;
- Fig. 10a-10g: are an exploded views demonstrating the external rear-view device assembly method, in accordance with an embodiment;
- Fig. 11A: illustrates electrical connections with the image capturing devices when assembled in a lower sub-assembly, in accordance with an embodiment; and
- FIG. 11B: illustrates coupling of the upper base cover to the previously assembled lower sub-assembly.

The drawings referred to in this description are not to be understood as being drawn to scale except if specifically noted, and such drawings are only exemplary in nature.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals (e.g., first, second, etc.) used in the description herein are merely identifiers for distinguishing one element from another element.

The following detailed description of illustrative embodiments is better understood when read in conjunction with the appended drawings. To illustrate the present disclosure, exemplary constructions of the disclosure are shown in the drawings. However, the present disclosure is not limited to a specific device, or a tool and instrumentalities disclosed herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality too, and without imposing limitations upon, the present disclosure.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of components. Additionally, various terms and/or phrases describing or indicating a position or directional reference such as, but not limited to, "top", "bottom", "front", "rear", "forward", "rearward", "end", "outer", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, the suffix "region", "part", "unit" for a component used in the following description are given or mixed in consideration of only the ease of writing the specification, and do not have meanings or roles distinguished from each other.

While the present disclosure is illustrated in the context of a four-wheeled vehicle, however, holding structure and aspects and features thereof can be used with other types of vehicles such as a two-wheeled vehicle, three-wheeled vehicle, six-wheeled vehicle, eight-wheeled vehicle, etc. as well. In illustrated embodiments, it is to be noted that terms such as "four-wheeled vehicle" and "vehicle" are interchangeably used throughout the description.

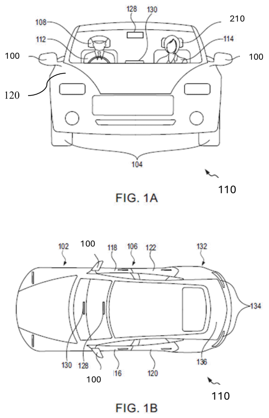

Various example embodiments of the present invention are described hereinafter with reference to FIG. 1A to FIG. 11B.

FIG. 1A illustrates a schematic front view of a vehicle 110, in accordance with an embodiment of the present disclosure. FIG. 1B illustrates a schematic top view of the vehicle 110, in accordance with an embodiment of the present disclosure. The vehicle 110 referred to herein embodies a four-wheeled vehicle. Alternatively, the vehicle 110 may embody other vehicles, such as two-wheeled vehicles, three-wheeled vehicles, six-wheeled vehicles, eight-wheeled vehicles, all-terrain vehicles (ATVs), etc., without limiting the scope of the invention.

The front portion 102 (refer FIG. 1B) of the vehicle 110 includes a power unit (not shown in FIGS. 1A and 1B). The power unit of internal combustion (IC) engine-based vehicle 110 includes an engine unit and a transmission unit, whereas the power unit of an electric based vehicle 110 includes a motor and the transmission unit. In an illustrated example, the power unit provides the necessary power required to drive the rear wheels (not shown in FIGS. 1A and 1B) of the vehicle 110. Alternatively, the power unit may provide the necessary power to drive the front wheels 104 (see, FIG. 1A), or both the front wheels 104 and the rear wheels simultaneously, without limiting the scope of the invention. It may be noted that the front portion 102 of the vehicle 110 is shown to have included the above-stated parts, however, those skilled in the art will appreciate that the front portion of the vehicle 110 includes other parts that may not be relevant for explaining the present invention and hence are not shown and described.

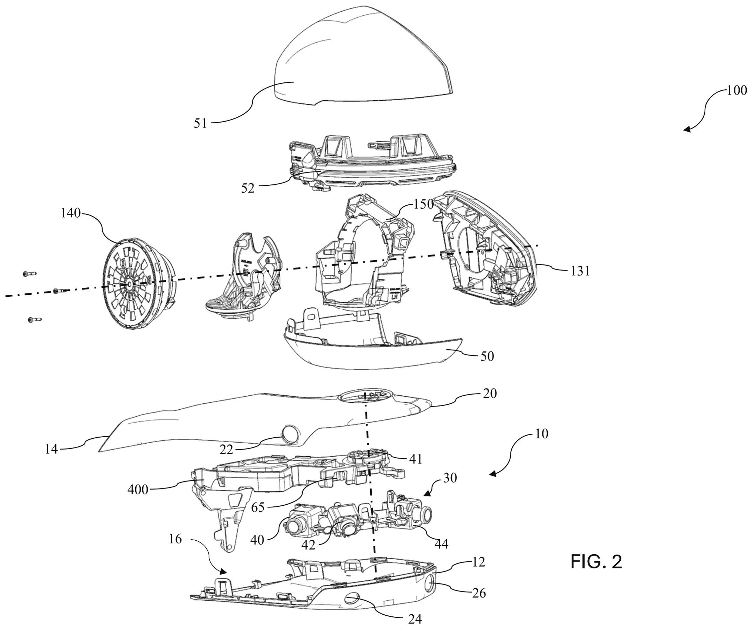

A middle portion 106 of the vehicle 110 includes a driver seat 108 and a passenger seat(s) 210 (shown in FIG. 1A). The driver seat 108 provides seating for a driver 112 and the passenger seat 210 provides seating for a passenger 114. The middle portion 106 of the vehicle 110 further includes a front left-side door 116, a front right-side door 118, a back left-side door 120, and a back right-side door 122 (shown in FIG. 1B). An external rear-view-mirror 100 couples to the external body of the vehicle 110. In an illustrated example, a left rear-view device is coupled to the front left side door and a right rear-view device is coupled to the front rightside door. Each of the left rear-view device and the right rear-view device assists the driver 112 in seeing the areas outside a peripheral vision (i.e., a blind spot). Furthermore, the middle portion 106 of the vehicle 110 includes an interior rear-view device 128. An interior rear-view device 128 assists the driver 112 in seeing the road, vehicles on the road, and objects behind the vehicle 110. Moreover, the middle portion 106 of the vehicle 110 includes a display unit 130 adapted to serve one or more purposes. In a non-limiting example, the display unit 130 displays desired views being captured by at least three image capturing devices 40, 42, 44 (not shown in FIGS. 1A and 1B, refer FIG. 2). The at least three image capturing devices may be installed within any one of the left rear-view devices, the right rear-view device, or both of the external rear-view device 100 without limiting the scope of the invention. The interior of the vehicle 110 may also include the interior rear-view mirror 128 to provide back view to the driver 112. Furthermore, a rear portion 132 (see FIG. 1B) of the vehicle 110 includes at least taillight assemblies 134 and a boot space 136. The boot space 136 allows the driver 112 and the passenger 114 to store articles securely. It may be noted that the middle portion 106 and the rear portion 132 of the vehicle 110 are shown to have included the above-stated parts, however, those skilled in the art will appreciate that the middle portion 106 and the rear portion 132 of the vehicle 110 include other parts which may not be relevant for explaining the present invention and hence are not shown and described.

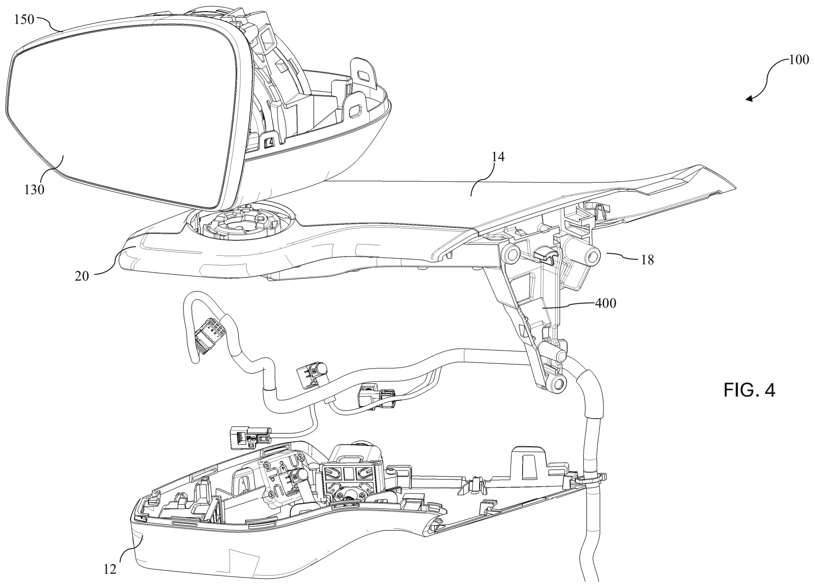

FIGS. 2, 3, and 4 illustrate an exploded view of an external rear-view device 100 of the vehicle 110, in accordance with an embodiment of the present disclosure. The rear-view device 100 comprises at least one structural component 10 being provided by a base assembly 10, which comprises a lower base cover 12, an upper base cover 14, an intermediate member 400 and a housing cover 50, 51. Referring to FIG. 4, the base assembly 10 comprises a proximal end 18 and a distal end 20. The proximal end 18 of the structural component 10 may be configured to securely attach with an external component of the vehicle 110, while the distal end 20 extends outward to provide optimal positioning for the image capturing devices 40, 42, 44. In an embodiment, the lower base cover 12 and the upper base cover 14 may be configured to fit together precisely. In another embodiment, the lower base cover 12 and the upper base cover 14 are adapted to define an accommodation space 16 therein between. A camera holding device 30 is configured to be mounted inside the accommodation space 16. In an embodiment, at least three image capturing devices 40, 42, 44 are accommodated in the camera holding device 30.

The base assembly 10 also includes strategically positioned at least three apertures 22, 24, 26, aligned with lenses of the image capturing devices 40, 42, 44 to ensure unobstructed views of the surrounding. In an embodiment, the at least three apertures 22, 24, 26 comprising a first aperture 22, a second aperture 24 and a third aperture 26, wherein the first aperture 22 may be positioned on the upper base cover 14 while the second aperture 24 and third aperture 26 may be positioned on the lower base cover 12.

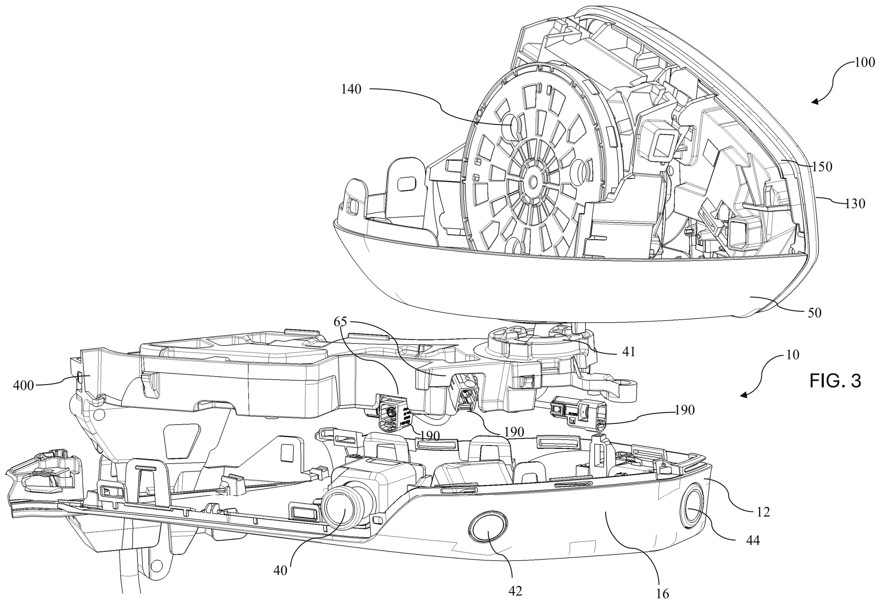

Referring to FIG. 2 and FIG. 3, in an embodiment, an intermediate member 400 may be positioned between the lower base cover 12 and the upper base cover 14. The intermediate member 400 may be configured with at least one pivoting means 41 to pivot the at least one housing cover 50, 51. In another embodiment, the intermediate member 400 may comprise at least one slot 65 to secure at least one electrical connector 190 so that a stable electrical connection may be provided to the image capturing devices 40, 42, 44. In another embodiment, the housing covers 50, 51 may be mounted on the upper base cover 14 of the base assembly 10 or the intermediate member 400. In still another embodiment, the housing covers 50, 51 are provided to at least partly enclose at least one of a rear-view element 131, an actuator 140, and/or a bezel 150. A light guide 52 may also be provided to be abutted between the housing covers 51 and 52. Thus, the present disclosure demonstrates how various components are adapted to fit together in a compact and efficient manner.

Referring again to FIG. 2 and FIG. 3, in an embodiment, the camera holding device 30 may be adapted to accommodate the at least three image capturing devices 40, 42, 44 in different orientations. Thus. the image capturing devices 40, 42, 44 may be installed within the camera holding device 30. The different orientations of the image capturing devices 40, 42, 44 may be positioned strategically to provide comprehensive visual coverage, addressing the limitations of blind spots often encountered in conventional rear-view systems. In addition, the present disclosure underscores the camera holding device 30 abilities to integrate multiple devices within a single integral unit, providing a significant improvement over the existing rear-view system. The present external rear-view device 100 also enhances vehicle safety and provides added functionality to the Driver Monitor System (DMS), Advanced Driver Assistance System (ADAS) or Camera Monitor System (CMS) of the vehicle 110. FIG. 3 further provides a spatial arrangement and support structure of the base assembly 10 within the external rear-view device 100.

Referring to FIG. 4, the camera holding device 30 may be positioned on the lower base cover 12 of the structural component 10. The intermediate member 400 may also be configured with an opening to route a wire harness, originating from a battery (not shown), for providing power supply to the image capturing devices 40, 42, 44 and/or other electrical components such as light source placed inside the external rear-view mirror 100.

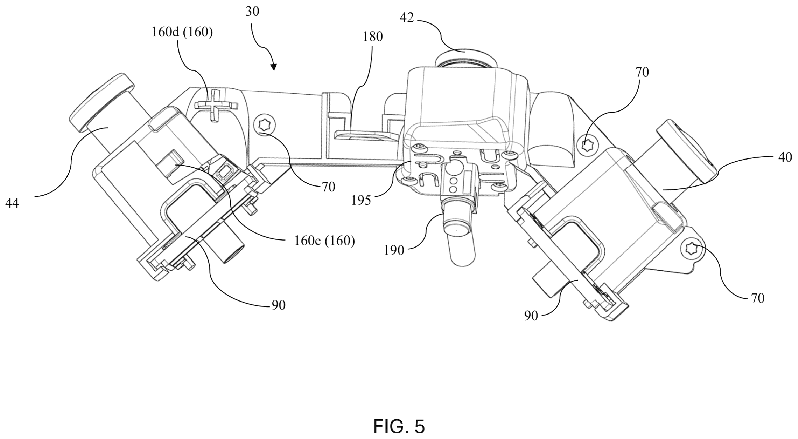

Referring to FIG. 5, the camera holding device 30 may comprise at least three chambers 32, 34, 36. In an embodiment, each chamber 32, 34, 36 is provided with a first, front opening 93 facing the outside of the external rear-view device 100 in an assembled state and a second, rear opening 92 facing the inside of the external rear-view device 100 in the assembled state. Thus, the camera holding device 30 provides one chamber 32, 34, 36 per image capturing device 40, 42, 44. The image capturing devices 40, 42, 44 may also be referred to as an automotive camera unit. The camera holding device 30 may also comprise locating elements 160 with precise features being crucial for ensuring accurate positioning of the camera holding device 30 within the structural component provided by the base assembly 10, contributing to the overall reliability and performance of the device. Additionally, mounting provisions 70 such as screws or holes may be provided on the camera holding device 30 such the camera holding device 30 may be securely fastened to corresponding mounting provisions (*not shown*) provided on the base assembly 10.

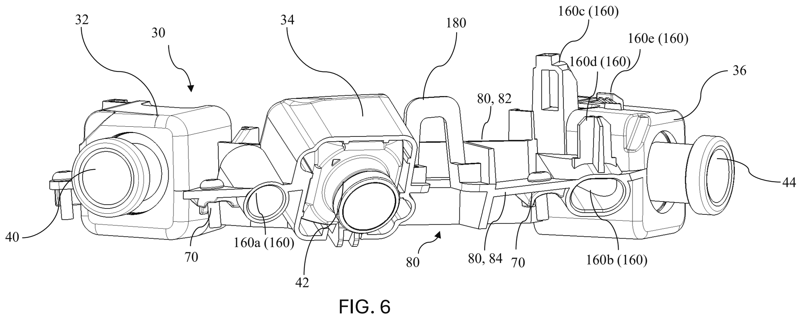

FIG. 6 provides an isometric front view of the camera holding device 30 accommodating the at least three image capturing devices 40, 42, 44. The camera holding device 30 may be characterized by the multiple chambers 32, 34, 36, each adapted to house an individual image capturing device 40, 42, 44. The at least three chambers 32, 34, 36 may comprise a first chamber 32, a second chamber 34, and a third chamber 36. These chambers 32, 34, 36 are not simple cavities but precisely adapted compartments, likely incorporating several advanced features. The at least three image capturing devices 40, 42, 44 comprises a first image capturing device 40, a second image capturing device 42 and a third image capturing device 44. The first chamber 32 may be adapted to secure the first image capturing device 40. The second chamber 34 may be adapted to secure the second image capturing device 42. The third chamber 36 may be adapted to secure the third image capturing device 44. In an embodiment, the second image capturing device 42 may be adapted to be secured in the second chamber 34 via any one from a snap-fit arrangement, a removably coupling arrangement or any combination thereof. The first image capturing device 40 may be configured to provide front view of the vehicle 110, the second image capturing device 42 may be configured to provide 360 degrees surround view of the vehicle 110, and the third image capturing device 44 may be configured to provide rear-view of the vehicle 110. The first chamber 32 may include a first profile complementary to a first outer surface of the first image capturing device 40, the second chamber 34 may include a second profile complementary to a second outer surface of the second image capturing device 42, and the third chamber 36 may include a third profile complementary to a third outer surface of the third image capturing device 44. In another embodiment, the at least three image capturing devices 40, 42, 44 may be fully or partly belong to the Driver Monitor System (DMS), Advanced Driver Assistance System (ADAS) and/or Camera Monitor System (CMS).

Referring again to FIG. 6 which provides an isometric view of the camera holding device 30 accommodating the image capturing devices 40, 42, 44. The camera holding device 30 may be equipped with multiple locating provisions 160 and mounting provisions 70 such as screw or holes wherein the multiple locating provisions 160 ensure exact positioning of the camera holding device 30 within the base assembly 10, critical for maintaining proper alignment of all components, and the mounting provisions 70 provide secure attachment points, ensuring the camera holding device 30 remains stable during vehicle operation.

The locating provisions 160 may include recessed slots 160a, 160b, an elongated element 160c, a cruciform element 160d, and/or an interface element 160e. These locating provisions 160 may be integral to the camera holding device 30 and play a crucial role in its interaction with the base assembly 10. The locating provisions 160 may also take various forms, each adapted to achieve accurate alignment. There may be corresponding provisions in the base assembly 10 or other geometrical features that correspond to matching to these locating provisions 160. In an embodiment, the locating provision 160 may be a hole 160a, 160b or a series of holes160a, 160b adapted to accept alignment pins from the base assembly 10, ensuring exact positioning in all dimensions. In another embodiment, the locating provision 160 may take the form of an elongated element 160c, such as a ridge or groove, which guides the camera holding device 30 into the correct position along a specific axis. In still another embodiment, the locating provisions 160, may be a cruciform element 160d, which provides alignment in multiple axes simultaneously. The cruciform element 160d may be a raised cross-shaped feature on the camera holding device 30 that fits into a corresponding recess in the base assembly 10. In another embodiment, the interface element 160e of the locating provisions 160 may include spring type property that mate with corresponding surfaces in the base assembly 10. This spring type interface 160e ensures proper orientation and prevent misalignment during assembly. The locating provisions 160 work in tandem with the mounting provisions 70 to not only position the camera holding device 30 correctly but also to secure it firmly in place. This dual functionality ensures that once the camera holding device 30 is correctly positioned using the locating provisions 160, it remains in that precise location throughout the device's operational life. These locating provisions 160 consider factors such as thermal expansion, vibration, and potential wear overtime. The locating provisions 160 may be adapted to withstand manufacturing tolerances, assembly requirements, and the need for repeatable, precise positioning. Materials are chosen for their dimensional stability and wear resistance to maintain accuracy throughout the life of the device. In some cases, the locating provisions 160 may incorporate with slight flexibility or adjustability to accommodate minor variations in manufacturing tolerances while still ensuring overall precision in the assembly. By incorporating these carefully adapted locating provisions 160, the external rear-view device 100 achieves a high level of accuracy in component positioning. This precision is crucial for ensuring proper alignment of the image capturing devices 40, 42, 44 with the apertures 22, 24, 26 in the base assembly 10, thereby maintaining the intended field of view and image quality. The effectiveness of these locating provisions contributes significantly to the overall performance, reliability, and manufacturability of the external rear-view device 100.

Each chamber 32, 34, 36 may include shock-absorbing elements to protect the image capturing devices 40, 42, 44 from vehicle vibrations, ensuring stable image capture even in rough driving conditions. Thermal management features may be integrated to regulate temperature, maintaining optimal operating conditions for the sensitive image capturing devices 40, 42, 44. Electrical contacts for power supply and data transmission are likely incorporated, ensuring seamless connectivity. Additionally, alignment features may be present to guarantee precise positioning of each image capturing devices 40, 42, 44, crucial for maintaining consistent field of view and image quality.

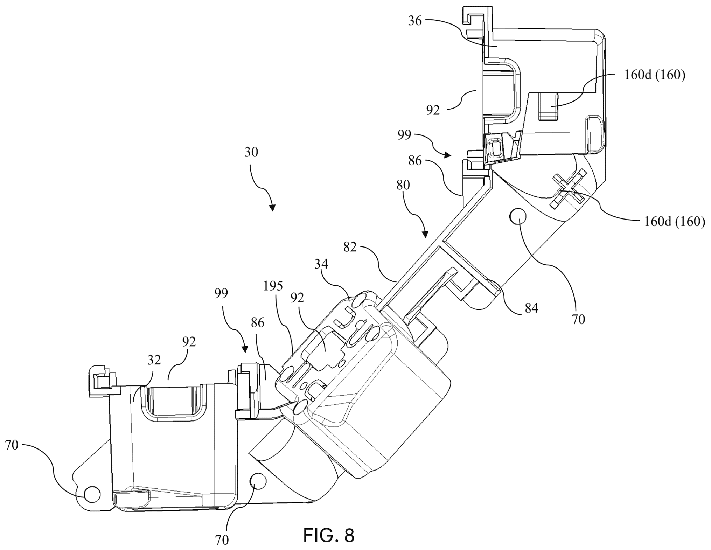

Referring to all FIG. 6, FIG. 7 and FIG. 8, the camera holding device 30 may be included with a rib structure 80, which interconnects the at least three chambers 32, 34, 36 with each other. The rib structure 80 comprises an axial rib element 82, a lateral rib element 84, and a structural rib element 86 (see FIG. 8). The rib structure 80 is adapted to provide flexibility to hold the at least three chambers 32, 34, 36 in a plane, preferably being a horizontal plane or a vertical plane. The axial rib element 82 runs along a breath of the camera holding device 30, providing stability along a vertical plane, while the lateral rib element 84 connects the chambers laterally, allowing for adjustment in the horizontal plane. The structural rib element 86 adds overall rigidity as well as flexibility to the camera holding device 30 while facilitating the angled positioning of the chambers 32, 34, 36. This rib structure 80 serves multiple crucial functions. Firstly, it provides the necessary structural support to maintain the integrity of the camera holding device 30 under various stresses encountered during vehicle operation. Secondly, it offers a degree of flexibility, allowing for fine adjustments in the positioning of each chamber. This flexibility is essential for aligning the image capturing devices 40, 42, 44 precisely with the apertures 22, 24, 26 in the base assembly 10 and for accommodating minor manufacturing tolerances. This structure provides both essential support and necessary flexibility to the overall assembly. The flexibility of the rib structure 80 allows for slight adjustments in the positioning of each chamber 32, 34, 36, which may be crucial for fine-tuning image capturing devices 40, 42, 44 angles or accommodating minor manufacturing variations. Furthermore, the rib structure 80 also plays a role in thermal management, potentially assisting in heat dissipation from the image capturing devices 40, 42, 44 to prevent overheating. The rib structure 80 may be adapted to maximize a compact form factor of the camera holding device 30. Additionally, the rib structure 80 may be configured with a holder 180 to removably couple the camera holding device 30 with the base assembly 10, preferably on the upper base cover 14 of the base assembly 10.

The mounting provisions 70 may also be specifically adapted to secure the camera holding device 30 and other components firmly within the base assembly 10. The mounting provisions 70 may be integrated into the camera holding device 30, particularly on the rib structure 80. They may be configured to interface securely with corresponding features in the base assembly 10, creating a robust and reliable connection. These provisions 70 may take various forms, each tailored to meet specific requirements of strength, ease of assembly, and potential serviceability. One common type of mounting provisions 70 might be threaded inserts molded or press-fit into the camera holding device 30. These allow for secure attachment using screws, providing a strong mechanical connection that can withstand the vibrations and forces encountered during vehicle operation. The use of threaded inserts also allows for easy disassembly if maintenance or replacement is required. In another embodiment, the mounting provisions 70 may incorporate snap-fit features. These could be flexible tabs or protrusions that engage with corresponding recesses or catches in the base assembly 10. In still another embodiment, the mounting provisions 70 may be precisely positioned holes or slots in the camera holding device 30. These may align with bosses or mounting points in the base assembly 10, allowing for secure fastening with bolts or other mechanical fasteners. The mounting provisions 70 may also include vibration-damping elements. The mounting provisions 70 may include integrated or separate rubber or elastomeric components that help isolate the camera holding device 30 and its sensitive image capturing devices 40, 42, 44 from vehicle vibrations, enhancing image stability and protecting the image capturing devices 40, 42, 44 from potential damages. In an embodiment, the mounting provisions 70 may incorporate a quick-release mechanism. This quick-release mechanism may allow for rapid removal of the camera holding device 30 for maintenance or upgrades, while still ensuring secure attachment during normal operation. The materials used for the mounting provisions 70 are carefully selected to provide the necessary strength and durability. The materials must withstand repeated assembly and disassembly cycles, resist corrosion, and maintain their structural integrity over the life of the device.

The positioning of the holder 180 of the rib structure 80 may strategically be planned to distribute forces evenly across the camera holding device 30, preventing undue stress on any single point. This distribution of the holder 180 helps ensure the stability of the image capturing devices 40, 42, 44, maintaining their alignment even under challenging driving conditions.

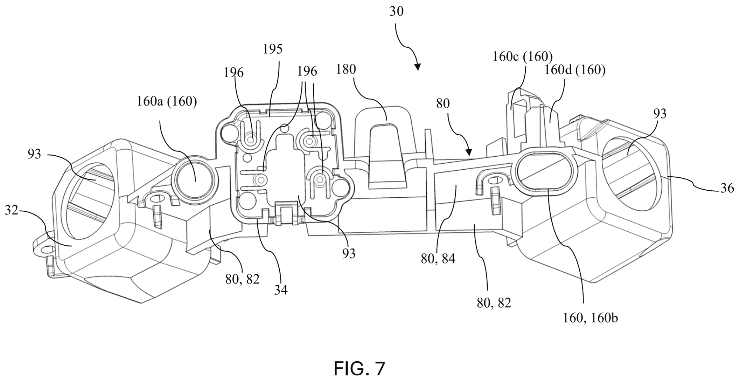

Referring again to both FIG. 7 and FIG. 8, the camera holding device 30 is adapted for the strategic angling or bending of the chambers 32, 34, 36 relative to each other. This angling of the chambers 32, 34, 36 enables a wider combined field of view and different orientations of the image capturing devices 40, 42, 44. As described above, the first image capturing device 40 may be configured to provide front view of the vehicle 110, the second image capturing device 42 may be configured to provide 360 degrees surround view of the vehicle 110, and the third image capturing device 44 may be configured to provide rear-view of the vehicle 110. In an embodiment, where angling of the chambers 32, 34, 36 are provided, the rib structure 80 may be formed with a bend 99 to provide an angle between the chambers 32, 34, 36. In embodiment, the structural rib element 86 in the region of the bend 99 is provided for positioning the chambers 32, 34, 36. These rib structure 80 helps in preventing the camera holding device 30 bending from the nominal position.

Each chamber 32, 34, 36 may be provided with the first, front opening 93 (refer to FIG. 7) facing the outside of the external rear-view device 100 when assembled in the external rear-view mirror 100 and the second, rear opening 92 (refer to FIG. 8) when assembled in the external rear-view mirror 100. The first, front opening 93 of the second chamber 34 may be used to insert the second image capturing device 42. On the contrary, the second, rear opening 92 may be used to insert the first image capturing device 40 and the third image capturing device 44 in the first 32 and third chamber 36, respectively. Thus, the present disclosure allows for the secure mounting, precise positioning, and optimal functioning of the image capturing devices 40, 42, 44 while also providing flexibility for adjustments and potential future upgrades. This makes it a key element in enhancing the vehicle's visual monitoring capabilities and overall safety features.

Referring again to FIGS. 5, 7 and 8, a mounting means is provided for the second image capturing device 42 in form of a back plate 195. The back plate 195 is adapted to secure the second image capturing device 42 from the rear side of the second chamber 34. The back plate 195 is adapted with at least one spring tab 196 (see FIG. 7). The spring tab 196 acts as a flexible backstop unit. The spring tab 196 may also be adapted to apply constant pressure against the second image capturing device 42, preventing any unwanted movement or vibration during vehicle operation. Its spring-like properties allow it to accommodate slight variations in image capturing device 42 dimensions while maintaining consistent pressure. In an embodiment, the back plate 195 may be integrally formed with the second chamber 34, so an integral back plate 195 may be configured on a rear portion of the second chamber 34 to mount the second image capturing device 42. In another embodiment, the back plate 195 may also be adapted with the second, rear opening 92 for providing the electric connection to the second image capturing device 42.

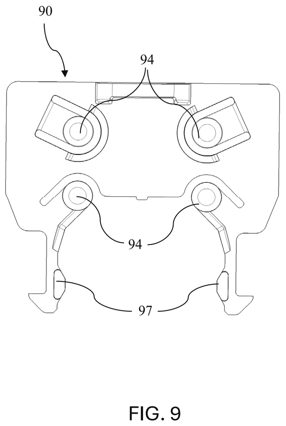

Referring FIG. 9, at least one clip 90 may be specifically adapted to securely fasten the image capturing devices 40, 42, 44 within their respective chambers 32, 34, 36 of a camera holding device 30. In an embodiment, a first clip 90 is adapted to secure the first image capturing device 40 at the rear side of the first chamber 32 and/or a second clip 90 is adapted to secure the third capturing device 44 from the back side of the third chamber 44. Each clip 90 comprises at least two legs 97 and at least one spring tab 94, wherein the spring tab 94 is a flexible backstop unit, wherein the legs 97 provide a bend and snap mechanism to the clip 90 to lock the same with the respective chamber 32, 36. In an embodiment, each clip 90 may be removed by transferring external force to the legs 97 and lifting upwardly. In an embodiment, the two legs 97 are arranged apart from each other to provide a U-shape. The clip 90 plays a vital role in ensuring the stability and reliability of the camera monitor system while also allowing for ease of installation, removal, and maintenance. The legs 97 may be adapted to apply consistent pressure, ensuring a firm grip on the image capturing devices 40, 44 without causing damage to its delicate components. The legs 97 may likely use materials and geometries that balance strength with flexibility, allowing them to maintain their securing function over time and through various operating conditions. The spring tab 94 may act as a flexible backstop unit. This adds an extra layer of security to the fastening mechanism. The spring tab 94 may also be adapted to apply constant pressure against the image capturing devices 40, 44, preventing any unwanted movement or vibration during vehicle operation. Its spring-like properties allow it to accommodate slight variations in image capturing devices 40, 44 dimensions while maintaining consistent pressure. The bend and snap mechanism incorporated in the clip 90 facilitates easy installation and removal of the image capturing devices 40, 44. The bend and snap mechanism may also be adapted to provide tactile and audible feedback when properly engaged, ensuring that technicians or users can confidently secure or release the image capturing devices 40, 44 without specialized tools. This tool-less design significantly enhances the serviceability of the external rear-view devices 40, 44, allowing for quick field replacements or upgrades when necessary. In an embodiment, the clip 90 may include a U-shape. The U-shape allows the clip to wrap around and securely hold the image capturing devices 40, 44. The U-shape provides a distributed securing force, minimizing stress on any single point of the image capturing devices 40, 44. The materials used in the construction of clip 90 may be chosen for their durability, resistance to fatigue, and ability to maintain their mechanical properties over a wide range of temperatures and environmental conditions. These materials may include high-grade polymers or spring steels that offer the necessary combination of strength, flexibility, and longevity. The clip 90 may also interface precisely with the chambers 32, 36 of the at least one camera holding device 30, ensuring that when engaged, it holds the image capturing devices 40, 44 in perfect alignment with the apertures 22, 26 of the base assembly 10. This precise alignment is crucial for maintaining the intended field of view and image quality of the camera monitor system.

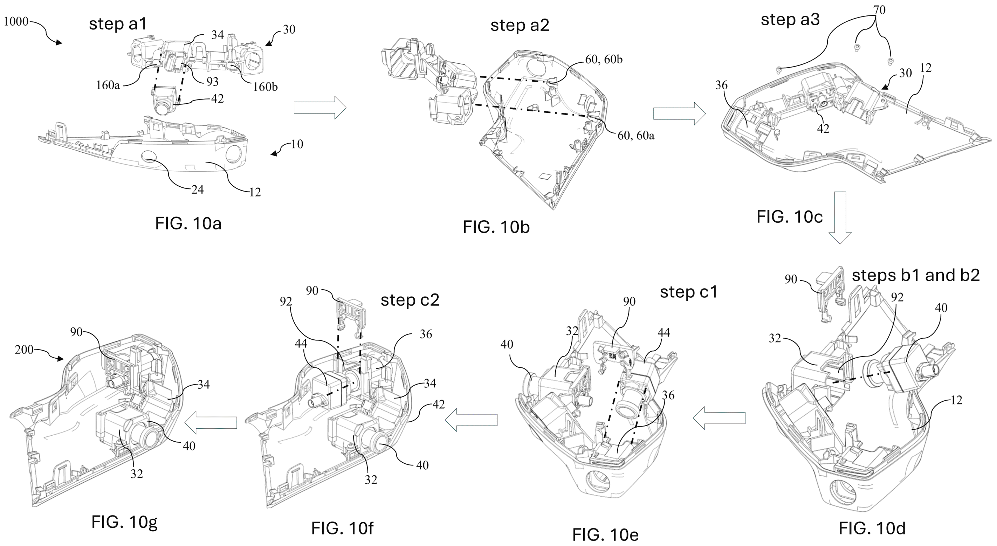

Referring to FIGS. 10a-10g, a method 1000 for assembling at least two image capturing devices 40, 42, 44 with different orientations, a camera holding device 30 providing one chamber 32, 34, 36 per image capturing device 40, 42, 44, and at least one structural component 10 of an external rear-view device 100 for a vehicle 110 is disclosed. Each chamber 32, 34, 36 is provided with a first, front opening 93 facing the outside of the external rear-view device 100 after assembly and a second, rear opening 92 facing the inside of the external rear-view device 100 after assembly.

Referring to FIG. 10a, the method 1000 of assembling may start with step a1. Step a1 involves inserting a second image capturing device 42 of the at least two image capturing devices 40, 42, 44 in a second chamber 34 of the camera holding device 30 from the front side of the second chamber 34 via its first, front opening 93. This step utilizes a snap-fit arrangement from the front of the camera holding device 30.

Referring to both FIG. 10b and FIG. 10c, herein method steps a2 and a3 are shown. Step a2 is performed by mounting the camera holding device 30 via locating provisions 160a, 160b (refer FIG. 10a) to complementary locating elements 60a, 60b provided by the structural component 10, after the insertion of the second image capturing device 42 in the insertion step a1. Thus, following initial second image capturing device 42 installation at step a1, the camera holding device 30 is precisely positioned within the lower base cover 12. This crucial step relies on the adapted locating provisions 160a, 160b of the camera holding device 30 and corresponding locating elements 60a, 60b on the structural component 10, preferably the lower base cover 12, ensuring the camera holding device 30 aligns perfectly within the structural component or base assembly 10. The precision of this alignment is paramount, as it directly affects the functionality and the field of view of the entire camera monitor system. Once the camera holding device 30 is correctly positioned, method 1000 moves to step a3, here the camera holding device 30 is firmly secured to the lower base cover 12, typically through mounting provisions 70 such as screwing mechanism 70, thereafter the process moves to step b1. The method 1000 then progresses to the installation of the remaining image capturing devices 40 and 44.

Referring to FIG. 10d, herein method steps b1 and b2 are shown. Step b1 involves inserting a first image capturing device 40 in a first chamber 32 of the camera holding device 30 from the rear of the first chamber 32 via its second, rear opening 92. In an embodiment, step b2 involves locking of the first image capturing device 40 by a first clip 90 from the rear of the first chamber 32.

Referring to FIG. 10e, here step c1 is shown, and step c1 involves inserting a third image capturing device 44 in a third chamber 36 from the rear side of the third chamber 36 via its second, rear opening 92.

In another embodiment, the insertion step b1 of the first image capturing device 40 in the first chamber 32 is performed prior to the insertion step a1 of the second image capturing device 42 in the second chamber 34 and, if existing, also prior to the insertion step c1 of the third image capturing device 44 in the third chamber 36. In still another embodiment, the insertion step c1 of the third image capturing device 44 in the third chamber 36 may be performed prior to the insertion step b1 of the second image capturing device 42 in the second chamber 34.

In an embodiment, the camera holding device 30 is provided, in particular, with the second chamber 34 being arranged between the first and third chambers 32, 36 and/or as an asymmetric one-piece camera holding device 30. The asymmetric one-piece camera holding device allows a more comprehensive field of view and reducing blind spots for the image capturing devices 40, 42, 44.

Referring to FIGS. 10d and 10f, steps f and g are shown. In an embodiment, step f involves locking of the first image capturing device 40 by a first clip 90 from the rear of the first chamber 32 and similarly, step g involves locking of the third image capturing device 44 by a second clip 90 from the rear of the third chamber 36. Steps f and g are preferably preformed after mounting and/or coupling of the camera holding device 30 in the mounting step d and/or coupling step e, respectively. The unique U-shape of the clip 90, working in concert with its legs 97 and spring tab 94, provides a robust and reliable hold on each device, crucial for maintaining consistent devices 40, 42, 44 positioning during vehicle operation. Further, the U-shape of the clip 90 aids in providing electrical connections to the image capturing devices 40, 44.

Referring to FIG. 10g, with all the image capturing devices 40, 42, 44 securely in place, this sub assembly may be referred to as a lower base assembly 200.

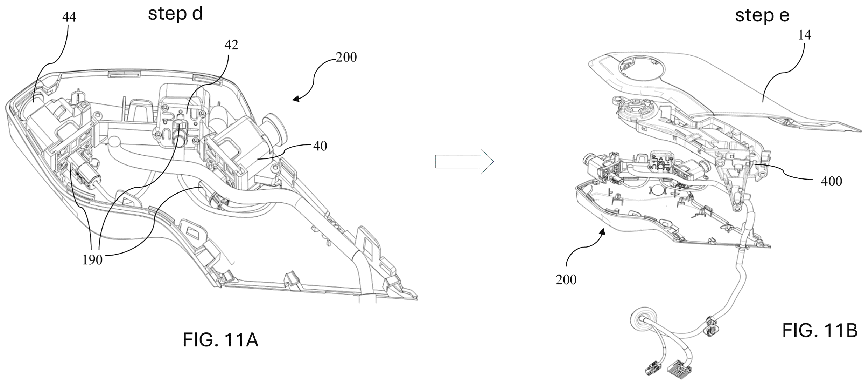

Thereafter, referring to FIG. 11A, the assembly process moves to step d of establishing electrical connections. This involves carefully connecting the various electrical connectors 190 to their corresponding image capturing devices 40, 42, 44. In an embodiment, step d may be performed preferably after the locking step b2 and/or step c2. This step may involve intricate routing of associated wiring or connectors, requiring attention to detail to prevent any potential interference or strain on the components. This step is also vital for ensuring proper power supply and data transmission to each image capturing devices 40, 42, 44, enabling the integrated functionality of the external rear-view device 100.

Referring to FIG. 11B, the final major step e in the assembly sequence is coupling of the upper base cover 14 to the previously assembled lower sub-assembly 200. This action completes the enclosure of the structural component or base assembly 10, effectively sealing and protecting all the internal components from external elements and potential damage.

Throughout the assembly process, meticulous care is taken to ensure that all components are not only correctly aligned but also that no wires are pinched or unduly strained, and that all securing mechanisms are properly engaged. This comprehensive assembly method exemplifies the thoughtful and innovative design of the external rear-view device 100. It strikes a delicate balance between the needs for precise component placement, secure fastening, and ease of assembly. The assembly process aims to significantly enhance both the functionality and serviceability of vehicle camera systems, ultimately contributing to improved safety and performance in automotive applications.

As described above, although the embodiments are described by the limited embodiments and the drawings, various modifications and changes may be made by those skilled in the art from the above description. For example, appropriate results may be achieved even if the described techniques are performed in a different order than the described method, and/or components of the described system, structure, apparatus, circuit, etc. are combined or combined in a different form than the described method or replaced or substituted by other components or equivalents.

Therefore, other implementations, other embodiments of the present disclosure, and those equivalent to the claims also fall within the claims to be described below.

### Reference Sign List

- 10: Structural component being base assembly
- 12: Lower base cover
- 14: Upper base cover
- 16: Accommodating space
- 18: Proximal end of the structural component
- 20: Distal end of the structural component
- 22: Aperture
- 24: Aperture
- 26: Aperture
- 30: Camera holding device
- 32: First chamber
- 34: Second chamber
- 36: Third chamber
- 40: First image capturing device
- 41: Pivoting means
- 42: Second image capturing device
- 44: Third image capturing device
- 50: Upper housing cover
- 51: Lower housing cover
- 52: Light guide
- 60a, 60b: Complementary locating elements provided by structural component
- 65: Slot for securing electrical connectors
- 70: Mounting provisions
- 80: Rib structure for interconnecting chambers
- 82: Axial rib element
- 84: Lateral rib element
- 86: Structural rib element
- 90: Clip
- 92: Rear opening of the chambers
- 93: Front opening of the chambers
- 94: Spring tab
- 97: Legs of clip
- 99: Bend in the rib structure
- 100: External rear-view mirror
- 102: Front portion of the vehicle
- 104: Front wheels of the vehicle
- 106: Middle portion of the vehicle
- 108: Driver seat
- 110: Vehicle
- 112: Driver
- 114: Passenger
- 116: Front left-side door
- 118: Front right-side door
- 120: Back left-side door
- 122: Back right-side door
- 128: Interior rear-view device
- 130: Display unit for showing captured views
- 131: Rear-view element
- 132: Rear portion of the vehicle
- 134: Taillight assemblies of the vehicle
- 136: Boot space for storage
- 140: Actuator
- 150: Bezel
- 160: Locating provision
- 160a: Recessed slot or hole in the locating provision
- 160b: Recessed slot or hole in the locating provision
- 160c: Elongated element in the locating provision
- 160d: Cruciform element in the locating provision
- 160e: Interface element in the locating provision
- 180: Holder of rib structure
- 190: Electrical connectors
- 195: Back plate
- 196: Spring tab for back plate
- 200: Lower base assembly
- 210: Passenger seat
- 400: Intermediate member
- 1000: Assembly method

## Claims

1. An external rear-view device (100) for a vehicle (110), comprising:
• at least one structural component (10) being provided by a base assembly, which comprises a lower base cover (12) and an upper base cover (14), wherein the lower base cover (12) and the upper base cover (14) are adapted to define an accommodation space (16) therein between;
• a camera holding device (30) configured to be mounted at least partially inside the accommodation space (16) and provided with at least two chambers (32, 34, 36); and
• at least two image capturing devices (40, 42, 44), which are accommodated in the camera holding device (30), wherein the camera holding device (30) provides one chamber (32, 34, 36) per image capturing device (40, 42, 44),
each chamber (32, 34, 36) is provided with a first, front opening (93) facing the outside of the external rear-view device (100) in an assembled state and a second, rear opening (92) facing the inside of the external rear-view device (100) in the assembled state, **characterized in that**
a first mounting means, comprising a first clip (90), is adapted to secure a first image capturing device (40) at the rear side of a first chamber (32) and a second mounting means, preferably a back plate (195), is adapted to secure a second image capturing device (42) from the rear side of a second chamber (34).

2. The external rear-view device (100) according to claim 1, wherein
each clip (90) comprises at least two legs (97) and at least one spring tab (94);
• wherein the spring tab (94) is a flexible backstop unit; and/or
• wherein the legs (97) provide a bend and snap mechanism to the clip (90) to lock the same with the respective chamber (32, 34, 36); and/or
• each clip (90) is removed by transferring external force to the legs (97), preferably followed by being lifted upwardly; and/or
• wherein the two legs (97) are arranged apart from each other to provide a U-shape.

3. The external rear-view device (100) according to claim 1 to 2, wherein
the back plate (195) is provided with at least one spring tab (196), with preferably
• the at least one spring tab (196) acting as a flexible backstop unit; and/or
• the back plate (195) being adapted to apply constant pressure against the second image capturing device (42); and/or
the back plate (195) is integrally formed with the second chamber (34); and/or the back plate (195) is formed with the second, rear opening (92) for providing the electric connection to the second image capturing device (42).

4. The external rear-view device (100) according to any one of the preceding claims
wherein
• the camera holding device (30) is positioned on the lower base cover (12); and/or
• the camera holding device (30) is provided with a rib stricture (80) for connecting the at least two chambers (32, 34, 36), with preferably at least one rib per chamber (32, 34, 36); and/or
• the camera holding device (30) is provided with at least one locating provision (160); and/or
• the camera holding device (30) is provided with at least one mounting provision (70), preferably on the rib structure, wherein the mounting provision (70) is adapted to securely couple with a corresponding mounting arrangement of the structural component (10).

5. The external rear-view device (100) according to claim 4, wherein
• the rib structure (80) is adapted to provide flexibility to hold the at least two chambers (32, 34, 36) in a plane, preferably being a horizontal plane or a vertical plane, to locate the at least one locating provision (160) provided inside the structural component (10); and/or
• the rib structure (80) is formed with a bend (99) to provide an angle between two neighboring chambers (32, 34, 36); and/or
• the rib structure (80) comprises an axial rib element (82) and a lateral rib element (84); and/or
• the rib structure (80) is provided with a holder (180) to removably couple the camera holding device (30) with the structural component (10), preferably on the upper base cover (14) of the structural component (10).

6. The external rear-view device (100) according to claim 5, wherein
the rib structure (80) further comprises a structural rib element (86) in the region of the bend (99), which is provided for positioning the chambers (32, 34, 36).

7. The external rear-view device (100) according to any one of claims 4 to 6, wherein
the at least one locating provision (160) provided on the camera holding device (30)
• includes a cruciform element (160d), an interface (160e), an elongated element (160c), a hole (160a, 160b), and/or a hoop clip (180), and/or
• cooperates with any of corresponding locating elements (60a, 60b) provided on the structural component (10).

8. The external rear-view device (100) according to any one of the preceding claims
wherein
each imaging capturing device (40, 42, 44) is oriented in a different direction for capturing a different field of view.

9. The external rear-view device (100) according to any one of the preceding claims
wherein
there are three chambers (32, 34, 36) for three image capturing devices (40, 42, 44), with preferably two image capturing devices (40, 44) being each secured via a clip (90), in particular the two image capturing devices (40, 44) arranged at the two ends of the camera holding device (30).

10. The rear-view device (100) according to claim 9, wherein
the camera holding device (30) is provided with the second chamber (34) being arranged between the first and third chambers (32, 36) and/or as an asymmetric one-piece camera holding device (30).

11. A method (1000) for assembling at least two image capturing devices (40, 42, 44) with different orientations, a camera holding device (30) providing one chamber (32, 34, 36) per image capturing device (40, 42, 44), and at least one structural component (10) of an external rear-view device (100) for a vehicle (110), in particular according to any one of the preceding claims,
wherein each chamber (32, 34, 36) is provided with a first, front opening (93) facing the outside of the external rear-view device (100) after assembly and a second, rear opening (92) facing the inside of the external rear-view device (100) after assembly,
the method comprising the following steps:
a1. inserting a second image capturing device (42) of the at least two image capturing devices (40, 42, 44) in a second chamber (34) of the camera holding device (30) from the front side of the second chamber (34) via its first, front opening (93), and
b1. inserting a first image capturing device (40) of the at least two image capturing devices (40, 42, 44) in a first chamber (32) of the camera holding device (30) from the rear of the first chamber (32) via its second, rear opening (92).

12. The method according to claim 11, wherein
three image capturing device (40, 42, 44) are provided and the camera holding device (30) is provided with three chambers (32, 24, 36) such that the method further comprises the following step:
c1. inserting a third image capturing device (44) in a third chamber (36) from the rear side of the third chamber (36) via its second, rear opening (92).

13. The method according to claim 11 or 12, further comprising the step of:
a2. mounting the camera holding device (30) via locating provisions (160a, 160b) to complementary locating elements (60a, 60b) provided by the structural component (10), preferably after the insertion of the second image capturing device (42) in the insertion step a1.

14. The method according to any one of claims 11 to 13, further comprising the step of:
a3. coupling the camera holding device (30) with the structural component (10) by at least one mounting provision (70), such as in form of at least one screw, preferably after mounting the camera holding device (30) in the mounting step a2.

15. The method according to any one of claims 11 to 14, wherein
the insertion step b1 of the first image capturing device (40) in the first chamber (32) is performed prior to the insertion step a1 of the second image capturing device (42) in the second chamber (34) and, if existing, also prior to an insertion step c1 of a third image capturing device (44) in a third chamber (36).

16. The method according to any one of claims 11 to 15, further comprising the step(s) of:
b2. locking the first image capturing device (40) by a first clip (90) from the rear of the first chamber (32), preferably after step a2 of mounting the camera holding device (30); and/or
c2. locking the third image capturing device (44) by a second clip (90) from the rear of the third chamber (36), preferably after step a3 of coupling of the camera holding device (30).

17. The method according to any one of claims 11 to 16, wherein
insertion of the second image capturing device (42) in the insertion step a1 comprises locking of the second image capturing device (42) via a snap fit arrangement.

18. The method according to any one of claims 11 to 17, further comprising the step of:
d. connecting connectors (190) with the image capturing devices (40, 42, 44) to provide a lower sub-assembly (200), preferably after the locking step b2 and/or step c2.

19. The method according to claim 18, further comprising the step of:
e. coupling the upper base corner (14) to the lower sub-assembly (200).
